# EUROPEAN PATENT SPECIFICATION

(11) **EP 2 559 660 B1**
(45) Date of publication and mention of the grant of the patent: **03.08.2016**
(21) Application number: 12162305.2
(22) Date of filing: 29.03.2012
(51) Int. Cl.: C01B 33/113, H01M 4/134, H01M 4/485, H01M 4/38, C01B 33/146, C01B 33/152, C01B 33/157, C01B 33/158, H01M 4/1395, H01M 10/0525

(54) **Negative electrode active material for rechargeable lithium battery, negative electrode including the same and method of preparing the same, and rechargeable lithium battery including the same**
Negativelektroden-Aktivmaterial für eine wiederaufladbare Lithiumbatterie, Negativelektrode damit, sowie Verfahren zu deren Herstellung, und wiederaufladbare Lithiumbatterie damit
Matériau actif d'électrode négative pour batterie au lithium rechargeable, électrode négative comprenant celui-ci, procédé de préparation associé et batterie au lithium rechargeable comprenant celui-ci

(30) Priority: 15.08.2011 US 201161523770 P; 19.12.2011 US 201113330600
(43) Date of publication of application: 20.02.2013
(73) Proprietor: Samsung SDI Co., Ltd., Yongin-si, Gyeonggi-do (KR)
(72) Inventor: Chun, Hee-Joon, Yongin-si, Gyeonggi-do (KR); Park, Seung-Hee, Yongin-si, Gyeonggi-do (KR); Kim, Tae-Gon, Yongin-si, Gyeonggi-do (KR); Kim, Joon-Sup, Yongin-si, Gyeonggi-do (KR); Choi, Wan-Uk, Yongin-si, Gyeonggi-do (KR); Tarui, Hisaki, Yongin-si, Gyeonggi-do (KR); Lee, Jea-Woan, Yongin-si, Gyeonggi-do (KR); Ryu, Jae-Yul, Yongin-si, Gyeonggi-do (KR); Back, Chang-Kuen, Yongin-si, Gyeonggi-do (KR); Lim, Young-Chang, Yongin-si, Gyeonggi-do (KR)
(74) Representative: Mounteney, Simon James

(56) References cited:
- EP-A1- 1 236 682
- US-A1- 2007 224 508
- US-A1- 2008 286 653

## Description

### BACKGROUND

### 1. Field

This disclosure relates to a negative electrode active material for a rechargeable lithium battery, a negative electrode including the same, a method of preparing the same, and a rechargeable lithium battery including the same.

### 2. Description of the Related Art

A lithium rechargeable battery has recently drawn attention as a power source for a small portable electronic device. It uses an organic electrolyte solution and thereby has twice the discharge voltage of a conventional battery using an alkali aqueous solution and as a result, has high energy density.

This rechargeable lithium battery is used by injecting an electrolyte into a battery cell including a positive electrode including a positive electrode active material that can intercalate and deintercalate lithium and a negative electrode including a negative electrode active material that can intercalate and deintercalate lithium.

However, a silicon-based material used as a negative electrode active material undergoes a crystalline structure change when it absorbs and stores lithium and thus, has a volume expansion problem. The volume change of the negative electrode active material causes a crack on the active material particles and thus, breaks them down or brings about a contact defect and the like with a current collector. As a result, a lithium rechargeable battery has a shorter charge discharge cycle-life.

Accordingly, the use of silicon oxide in this regard is actively researched. Silicon oxide is reported to be less expanded than silicon during a battery reaction and to bring about stable cycle-life

. EP1236682 discloses silicon oxide (SiOx), with x within the range from EP1236682 discloses silicon oxide (SiOx), with x within the range from 1.05 to 1.5 as negative electrode material

However, silicon oxide still has an insufficient stable cycle-life due to inherently low conductivity and a small specific surface area and expansion /contraction during the charge and discharge.

### SUMMARY

One embodiment provides a negative electrode active material for a rechargeable lithium battery by preventing volume change of a battery during the charge and discharge to improve cycle-life characteristic of the battery.

Another embodiment provides a negative electrode including the negative electrode active material.

Yet another embodiment provides a method of preparing the negative electrode.

Still another embodiment provides a rechargeable lithium battery including the negative electrode.

According to one embodiment, provided is a negative electrode active material for a rechargeable lithium battery, comprising particles of a first silicon oxide and particles of a second silicon oxide, wherein particles of the second silicon oxide have different particle diameters (D90) from particles of the first silicon oxide and a particle distribution peak area ratio of the first silicon oxide relative to the second silicon oxide in a range of 3.0 to 12.0.

The particle distribution peak area ratio of the first silicon oxide relative the second silicon oxide may preferably be in a range of 3.5 to 6.0.

A particle diameter (D90) ratio of the first silicon oxide relative to the second silicon oxide may preferably be in a range of 1.2 to 100.

The first silicon oxide may preferably have a particle diameter (D90) ranging from 6 to 50 µm. The second silicon oxide may preferably have a particle diameter (D90) ranging from 0.5 to 5 µm.

The first silicon oxide relative to the second silicon oxide may preferably have a weight ratio ranging from 1.8 to 19. The negative electrode active material may preferably include the first silicon oxide in an amount ranging from 65 to 95 wt% and the second silicon oxide in an amount ranging from 5 to 35 wt% based on the total amount of silicon oxide present.

The second silicon oxide relative to the first silicon oxide may preferably have a specific surface area ratio ranging from 2 to 50. The first silicon oxide may preferably have a specific surface area ranging from 1 to 5 m²/g. The second silicon oxide may preferably have a specific surface area ranging from 10 to 50 m²/g.

The negative electrode active material has a specific surface area ranging from 7 to 11.5 m²/g_{.}

The first silicon oxide may preferably have an electrical conductivity ranging from 1.0×10⁻² to 1.0×10⁰ S/m. The second silicon oxide may preferably have an electrical conductivity ranging from 1.0× 10 to 1.0× 10³ S/m.

The negative electrode active material may preferably have electrical conductivity ranging from 1.0×10⁰ to 1.0×10² S/m.

The negative electrode active material may preferably further include a coating layer coated on at least one surface of the first silicon oxide particles and/or the second silicon oxide particles, i.e. some or all of the particles of at least one of the first silicon oxide and the second silicon oxide may preferably be partly or entirely coated with a coating layer. At least one surface of the negative active material itself may preferably be coated by said coating layer. The coating layer may preferably include at least one selected from a carbon-based material, a metal, and a combination thereof.

According to another embodiment, provided is a negative electrode for rechargeable lithium battery that includes a current collector; and a negative electrode active material layer disposed on the current collector, wherein the negative electrode active material layer includes a negative electrode active material layer composition including the negative electrode active material and optionally a binder.

The binder may include one selected from polyimide, polyamide, polyamideimide, aramid, polyarylate, polymethylethylketone, polyetherimide, polyethersulfone, polysulfone, polyphenylene sulfide, polytetrafluoroethylene, polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polyvinylidene fluoride, polyethylene, polypropylene, styrene-butadiene rubber, acrylated styrene-butadiene rubber, an epoxy resin, nylon, and a combination thereof.

The binder may preferably be included in an amount of 1 to 30 wt% based on the entire amount of the negative electrode active material layer composition and in particular, more preferably, in an amount of 5 to 15 wt%.

According to another embodiment, provided is a method of preparing a negative electrode for a rechargeable lithium battery that includes preparing a negative electrode active material layer composition by mixing a first silicon oxide, a second silicon oxide with different particle diameters from the first silicon oxide, and a binder; and coating the negative electrode active material layer composition on a current collector.

The negative electrode active material layer composition may further include at least one selected from a carbon-based material, a metal, and a combination thereof.

Another embodiment provides a rechargeable lithium battery including a positive electrode; the negative electrode of the present invention; and an electrolyte solution.

Hereinafter, further embodiments will be described in detail.

The present invention may realize a rechargeable lithium battery with improved cycle-life characteristic by preventing volume change of the rechargeable lithium battery during the charge and discharge.

### BRIEF DESCRIPTION OF THE DRAWINGS

FIG. 1 is a schematic diagram showing the structure of a rechargeable lithium battery according to one embodiment.
FIGS. 2 to 4 are the diameter distribution graph of each negative electrode active material produced according to Examples 1 and 6 and Comparative Example 3.

### DETAILED DESCRIPTION

Embodiments of the present invention will hereinafter be described in detail.

The present invention provides a negative electrode active material for a rechargeable lithium battery, comprising particles of a first silicon oxide and particles of a second silicon oxide, wherein particles of the second silicon oxide have different particle diameters (D90) from particles of the first silicon oxide.

According to one embodiment, the present invention provides a negative electrode active material for a rechargeable lithium battery, comprising particles of a first silicon oxide and particles of a second silicon oxide, wherein particles of the second silicon oxide have different particle diameters (D90) from particles of the first silicon oxide and a particle distribution peak area ratio of the first silicon oxide relative to the second silicon oxide is in a range of 3.0 to 12.0, optionally from 3.0 to 10.0, optionally from 3.0 to 8.0, optionally from 3.5 to 6.0.

Both of the first and second silicon oxides may be preferably be amorphous SiOₓ (wherein x is 0<x<2, preferably 0.5 to 1.5) particles or a composite in which SiO or Si is dispersed inside a SiO₂ particle.

Closely examining each particle, the first silicon oxide may preferably have a particle diameter (D90) ranging from 6 to 50 µm and in particular, from 10 to 20 µm. In addition, the second silicon oxide may preferably have a smaller particle diameter (D90) than the first silicon oxide and in particular, preferably, a particle diameter (D90) ranging from 0.5 to 5 µm and more preferably, from 1 to 3 µm. The first silicon oxide relative to the second silicon oxide may preferably have a particle diameter ratio ranging from 1.2 to 100 and in particular, preferably, from 3.5 to 20. When two silicon oxides respectively having different particle diameters (D90) or a particle diameter (D90) ratio within the range are mixed, the smaller particles exist among the larger particles, which prevent disruptions of a conductive path according to expansion and contraction during the charge and discharge and thus, realize a rechargeable lithium battery with an excellent cycle-life characteristic.

The particle diameter (D90) refers to an average diameter of particles whose cumulative volume corresponds to 90 volume% in the diameter distribution graph.

The first silicon oxide may preferably be included in an amount of 65 to 95 wt% based on the entire weight of the first silicon oxide and the second silicon oxide and in particular, preferably in an amount of 70 to 90 wt%, more preferably in an amount of 75 to 85 wt%. In addition, the second silicon oxide may preferably be included in an amount of 5 to 35 wt% based on the entire weight of the first silicon oxide and the second silicon oxide and in particular, preferably in an amount of 10 to 30 wt%, more preferably, in an amount of 15 to 25 wt%. Furthermore, the first silicon oxide relative to the second silicon oxide may preferably have a weight ratio ranging from 1.8 to 19 and in particular, preferably, 3 to 6. When the two different silicon oxides discussed above are mixed within the above ranges, a negative electrode active material containing said silicon oxides does not have deteriorated initial capacity during the charge and discharge but maintains mass density, which decreases the rate of deterioration of the impregnation of an electrolyte solution and thus, realizes an excellent cycle-life characteristic of a battery.

According to one embodiment, the first and second silicon oxides preferably have different specific surface areas.

The specific surface area may preferably be measured using a BET method (preferably using a Micromeritics ASAP 2420).

As for each particle, the first silicon oxide may preferably, have a specific surface area ranging from 1 to 5 m²/g and in particular, preferably, from 2 to 4 m²/g. When the first silicon oxide has a specific surface area within these ranges, it leads to an improved maintenance of the initial capacity of a battery with almost no volume change during the charge and discharge and thus, maintains excellent cycle-life characteristic of the battery.

In addition, the second silicon oxide may preferably have a specific surface area ranging from 10 to 50 m²/g and in particular, preferably, from 20 to 45 m²/g. When the second silicon oxide has a specific surface area within these ranges, the mixture with the first silicon oxide has a large interaction with a binder, which prevents division of a conductive path due to expansion and contraction of a larger particle, that is, the first silicon oxide and also, deterioration of cycle-life characteristics due to expansion and contraction of a smaller particle, that is, the second silicon oxide.

In addition, the second silicon oxide relative to the first silicon oxide may preferably have a specific surface area ratio ranging from 2 to 50 and in particular, preferably, from 5 to 22.5.

According to one embodiment, a negative electrode active material for a rechargeable lithium battery may preferably be prepared by mixing two kinds of silicon oxide with different electrical conductivities.

As for each particle, the first silicon oxide may preferably have electrical conductivity ranging from 1.0×10⁻² to 1.0×10⁰ S/m and in particular, preferably, from 5.0×10⁻² to 5.0×10⁻¹ S/m.

In addition, the second silicon oxide may preferably have electrical conductivity ranging from 1.0×10 to 1.0×10³ S/m and in particular, preferably, from 5.0×10 to 5.0×10² S/m.

The negative electrode active material may preferably further include a coating layer coated on at least one surface of the first silicon oxide particles and/or the second silicon oxide particles, i.e. some or all of the particles of at least one of the first silicon oxide and the second silicon oxide may preferably be partly or entirely coated with a coating layer. At least one surface of the negative active material itself may preferably be coated by said coating layer. The coating layer may preferably be formed of one material selected from a carbon-based material, a metal, and a combination thereof.

The carbon-based material is preferably selected from natural graphite, artificial graphite, carbon black, acetylene black, ketjen black, an amorphous carbon fine powder, a coke powder, mesophase carbon, a vapor grown carbon fiber, a pitch base carbon fiber, a polyacrylonitrile-based carbon fiber, or a combination thereof, or a carbonization product from a precursor of sucrose, a phenol resin, a naphthalene resin, polyvinyl alcohol, a furfuryl alcohol resin, a polyacrylonitrile resin, a polyamide resin, a furan resin, a cellulose resin, a styrene resin, a polyimide resin, an epoxy resin, a vinyl chloride resin, citric acid, stearic acid, polyfluorovinylidene, carboxylmethylcellulose (CMC), hydroxypropylcellulose, polyvinylpyrrolidone, tetrafluoroethylene, polyethylene, polypropylene, ethylene-propylene-diene monomer (EPDM), sulfonated EPDM, starch, glucose, gelatin, sugars, coal pitch, petroleum pitch, polyvinylchloride, mesophase pitch, tar, low molecular weight heavy oil, or a combination thereof.

The metal is preferably selected from Al, Ti, Fe, Ni, Cu, Zn, Ag, Sn, and a combination thereof, and a powder-shaped or fiber-shaped metal.

All of the parameters mentioned in respect of particle size, e.g. particle diameter, (D90) values and particle distribution peak area ratio, may preferably be measured using a laser diffraction light scattering diameter distribution measurement method. Preferably, a Mastersizer 2000 (Malvern Instruments) laser diffractometer is used. The Mastersizer 2000 calculates the particle size distribution (and therefore the 90th percentile of this distribution - the D90) by volume as a default setting. This is the primary result calculation using Mie theory. When carrying out the measurement of the above parameters using a Mastersizer 2000 preferably a dispersant is used, preferably propan-2-ol (preferably 99.9% purity) is used as the dispersant. If propan-2-ol is used as a dispersant, the relative refractive index of propan-2-ol is taken as between 1.38 and 1.40, preferably 1.39. The particle refractive index is preferably set between 3.30 and 3.70, preferably at 3.50 when carrying out the measurement. Preferably, sonication for between 1 and 3 minutes, preferably 2 minutes, to aid dispersion is carried out. Sonication is preferably carried out between 1 kHz and 10KHz, preferably at 5kHz. The absorption index value is preferably set between 0.5 and 1.5, preferably a value of 1.0 is used.

The particle distribution peak area ratio is obtained by measuring the area under a volume-diameter particle size distribution graph for each of the first and second silicon oxides and calculating the ratio. The volume-diameter particle size distribution graph is preferably a normalized distribution frequency curve. An undersized curve, e.g. a cumulative 0-100% frequency curve, provides meaningless results. This measurement may be done pre or post to the mixing of the two silicon oxides. In certain embodiments it is done post mixing. The volume-diameter particle size distribution graph is preferably obtained using laser diffraction as discussed above.

In particular, the first silicon oxide relative to the second silicon oxide may preferably have a particle distribution peak area ratio ranging from 3.0 to 8.0 and in particular, preferably, from 3.5 to 6.0. When the particle distribution peak area ratio is within the range, a rechargeable lithium battery has an excellent cycle-life characteristic. The reason is that the second silicon oxide has a greater interaction with a binder and connects the first silicon oxide particles and resultantly, prevents division of a conductive path due to expansion and contraction of the first silicon oxide.

In one embodiment, a negative electrode active material may preferably have a specific surface area ranging from 7 to 11.5 m²/g and in particular, preferably, from 8 to 11 m²/g.

Furthermore, the negative electrode active material may preferably have electrical conductivity ranging from 1.0×10⁰ to 1.0×10²S/m and in particular, preferably, from 9.0x10⁰ to 9.0×10 S/m. When the negative electrode active material has electrical conductivity within the range, a rechargeable lithium battery has an excellent cycle-life characteristic.

The negative electrode active material of the present invention may preferably be prepared by mixing two types of commercially available silicon oxide that meet the requirements discussed above.

Alternatively, the silicon oxides may be prepared by a method comprising the following steps:
(i) co-depositing Si and SiO₂ on a substrate to form SiOₓ,
(ii) grinding and sieving a portion of the SiOₓ to prepare the first silicon oxide,
(iii) grinding and sieving a portion of the remaining SiOₓ to prepare the second silicon oxide, and
(iv) heat treating each of the first silicon oxdie and the second silicon oxide.

In step (i) the co-deposition is preferably conducted by vaporizing each of the Si and SiO₂ at high temperature, preferably 1000°C to 2400°C, and at atmospheric pressure.

In steps (ii) and (iii) the grinding and sieving are preferably controlled to yield a first and second silicon oxide having different particle diameters (D90) and parameters within the ranges discussed above.

In steps (iv) the heat treating is preferably conducted at temperature of more than 1200°C, more preferably 1200°C to 1700°C, more preferably 1200°C to 1600°C, more preferably 1200°C to 1500°C, more preferably 1300°C to 1500°C to prepare the amorphous SiOₓ particles. Alternatively, the heat treatment is preferably conducted at temperature of 800°C to 1200°C, more preferably 900°C to 1200°C, more preferably 950°C to 1100°C, to prepare the composite in which SiO or Si is dispersed inside a SiO₂ particle.

According to another embodiment, a negative electrode for a rechargeable lithium battery including the negative electrode active material discussed above is provided.

The negative electrode includes a negative current collector and a negative electrode active material layer disposed on the negative current collector, and the negative electrode active material layer includes the negative electrode active material and binder.

The binder improves binding properties of the negative electrode active material particles to each other and to a current collector, and may preferably be an organic binder and an aqueous binder. Examples of the binder may include polyimide, polyamide, polyamideimide, aramid, polyarylate, polymethylethylketone, polyetherimide, polyethersulfone, polysulfone, polyphenylene sulfide, polytetrafluoroethylene, polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polyvinylidene fluoride, polyethylene, polypropylene, styrene-butadiene rubber, an acrylated styrene-butadiene rubber, an epoxy resin, nylon, and the like, but are not limited thereto.

The binder may preferably be included in an amount of 1 to 30 wt% based on the entire weight of the negative electrode active material layer composition and in particular, preferably, from 5 to 15 wt%. When the binder is included within the range, the binder may bind particles and thus, provide the structure of a negative electrode active material with stability. The structural stability may remarkably improve excellent cycle-life of a battery.

The negative electrode active material layer may selectively include a conductive material.

Any electrically conductive material may preferably be used as a conductive material unless it causes a chemical change. Examples of the conductive material include a carbon-based material such as natural graphite, artificial graphite, carbon black, acetylene black, ketjen black, a carbon fiber, and the like; a metal-based material such as a metal powder or a metal fiber including copper, nickel, aluminum, silver, and the like; a conductive polymer such as a polyphenylene derivative; a mixture thereof.

According to another embodiment, a method of preparing a negative electrode for a rechargeable lithium battery including the negative electrode active material is provided.

The negative electrode may preferably be prepared by mixing the first silicon oxide, the second silicon oxide and the binder in a solvent to prepare a negative electrode active material layer composition, and coating the negative electrode active material layer composition on a current collector.

The solvent may preferably be N-methylpyrrolidone, but it is not limited thereto.

The first silicon oxide and the second silicon oxide used to prepare the negative electrode are respectively the same as illustrated above.

The negative electrode active material layer may further include a conductive material.

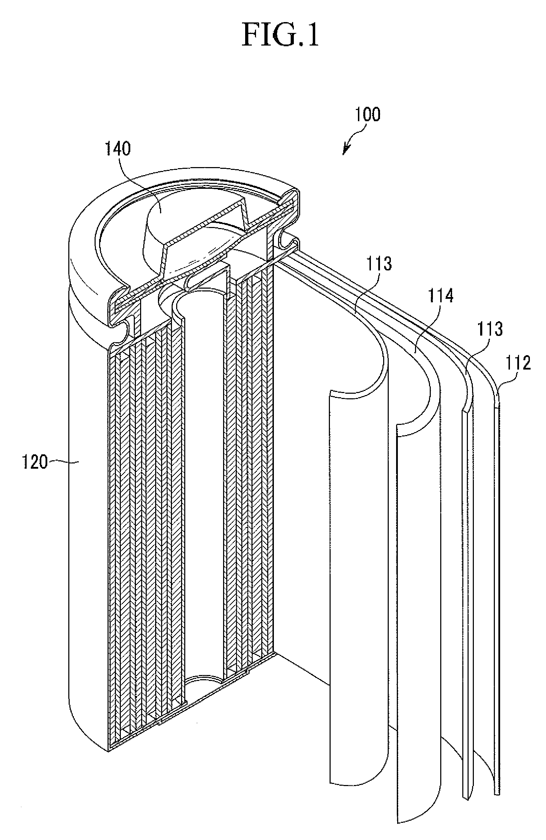

According to another embodiment, provided is a rechargeable lithium battery including the negative electrode of the present invention. The rechargeable lithium battery is illustrated referring to FIG. 1.

FIG. 1 is the schematic view of a rechargeable lithium battery according to one embodiment.

Referring to FIG. 1, a rechargeable lithium battery 100 according to one embodiment includes a battery cell including a positive electrode 114, a negative electrode 112 facing the positive electrode 114, a separator 113 interposed between the positive electrode 114 and negative electrode 112, and an electrolyte (not shown) impregnating the positive electrode 114, negative electrode 112, and separator 113, a battery case 120 housing the battery cell, and a sealing member 140 sealing the battery case 120.

The negative electrode 112 is the same as described above.

The positive electrode 114 may include a current collector and a positive active material layer on the current collector. The positive active material layer may include a positive active material, a binder, and selectively, a conductive material.

The current collector may preferably be Al but is not limited thereto.

The positive active material includes a lithiated intercalation compound that reversibly intercalates and deintercalates lithium ions. The positive active material may include a composite oxide including at least one selected from the group consisting of cobalt, manganese, and nickel, as well as lithium. In particular, the following lithium-containing compounds may preferably be used:
LiₐA_{1-b}B_{b}D₂ (wherein, in the above formula, 0.90 ≤ a ≤ 1.8 and 0 ≤ b ≤ 0.5); LiₐE_{1-b}B_{b}O_{2-c}D_{c} (wherein, in the above formula, 0.90 ≤ a ≤ 1.8, 0 ≤ b ≤ 0.5, 0 ≤ c ≤ 0.05); LiE_{2-b}B_{b}O_{4-c}D_{c} (wherein, in the above formula, 0 ≤ b ≤ 0.5, 0 ≤ c ≤ 0.05); LiₐNi_{1-b}-_{c}Co_{b}B_{c}D_{α} (wherein, in the above formula, 0.90≤a≤1.8, 0≤b≤0.5, 0≤c≤5 0.05, 0<α ≤ 2); LiₐNi_{1-b-c}Co_{b}B_{c}O_{2-α}F_{α} (wherein, in the above formula, 0.90≤a≤1.8, 0≤b≤0.5, 0 ≤c≤0.05, 0 < α < 2); LiₐNi_{1-b-c}Co_{b}B_{c}O₂₋ₐF₂ (wherein, in the above formula, 0.90≤a≤ 1.8, 0≤b≤0.5, 0≤c≤0.05, 0<α < 2); LiₐNi_{1-b-c}Mn_{b}B_{c}D_{α} (wherein, in the above formula, 0.90≤a≤1.8, 0≤b≤0.5, 0≤c≤0.05, 0<α≤2); LiₐNi_{1-b-c}Mn_{b}B_{c}O₂₋ₐFₐ (wherein, in the above formula, 0.90≤a≤1.8, 0≤b≤0.5, 0≤c≤0.05, 0 < α < 2); LiₐNi_{1-b-c}Mn_{b}B_{c}O_{2-α}F₂ (wherein, in the above formula, 0.90≤a≤1.8, 0≤b≤0.5, 0≤c≤ 0.05, 0 < α < 2); LiₐNi_{b}E_{c}G_{d}O₂ (wherein, in the above formula, 0.90≤a≤1.8, 0≤b≤ 0.9, 0≤c≤0.5, 0.001≤d≤0.1); LiₐNi_{b}Co_{c}Mn_{d}GeO₂ (wherein, in the above formula, 0,90≤a≤1.8, 0≤b≤0.9, 0≤c≤0.5, 0≤d≤0.5, 0.001≤e≤0.1); LiₐNiG_{b}O₂ (wherein, in the above formula, 0.90≤a≤1.8, 0.001≤b≤0.1); LiₐCoG_{b}O₂ (wherein, in the above formula, 0.90≤a≤1.8, 0.001≤b≤0.1); LiₐMnG_{b}O₂ (wherein, in the above formula, 0.90≤a≤1.8, 0.001≤b≤0.1); LiₐMn₂G_{b}O₄ (wherein, in the above formula, 0.90≤a≤ 1.8, 0.001≤b≤0.1); QO₂; QS₂; LiQS₂; V₂O₅; LiV₂O₅; LilO₂; LiNiVO₄; Li_{(3-f)}J₂(PO₄)₃(0≤f ≤2); Li_{(3-f)}Fe₂(PO₄)₃(0≤f≤2); and LiFePO₄.

In the above formulas, A is selected from Ni, Co, Mn, or a combination thereof; B is selected from Al, Ni, Co, Mn, Cr, Fe, Mg, Sr, V, a rare earth element, or a combination thereof; D is selected from O, F, S, P, or a combination thereof; E is selected from Co, Mn, or a combination thereof; F is selected from F, S, P, or a combination thereof; G is selected from Al, Cr, Mn, Fe, Mg, La, Ce, Sr, V, or a combination thereof; Q is selected from Ti, Mo, Mn, or a combination thereof; I is selected from Cr, V, Fe, Sc, Y, or a combination thereof; and J is selected from V, Cr, Mn, Co, Ni, Cu, or a combination thereof.

The compound may preferably have a coating layer on the surface, or may preferably be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may preferably be amorphous or crystalline. The coating element included in the coating layer may include Mg, Al, Co, K, Na, Ca, Si, Ti, V, Sn, Ge, Ga, B, As, Zr, or a mixture thereof. The coating layer may preferably be disposed in a method having no adverse influence on properties of a positive active material by using these elements in the compound. For example, the method may include any coating method such as spray coating, dipping, and the like, but is not illustrated in more detail since it is well-known to those who work in the related field.

The binder improves binding properties of the positive active material particles to each other and to a current collector. Examples of the binder include polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Any electrically conductive material may preferably be used as a conductive material unless it causes a chemical change. Examples of the conductive material include: one or more of natural graphite, artificial graphite, carbon black, acetylene black, ketjen black, a carbon fiber, copper, a metal powder or a metal fiber including nickel, aluminum, silver, and the like, and a polyphenylene derivative.

The positive electrode 114 may preferably be provided by mixing an active material, a conductive material, and a binder in a solvent to prepare an active material composition, and coating the composition on a current collector.

The electrode manufacturing method is well known, and thus is not described in detail in the present specification. The solvent may preferably be N-methylpyrrolidone, but it is not limited thereto.

The electrolyte solution includes a lithium salt and a non-aqueous organic solvent.

The non-aqueous organic solvent serves as a medium for transmitting ions taking part in the electrochemical reaction of a battery. The non-aqueous organic solvent may include a carbonate-based, ester-based, ether-based, ketone-based, alcohol-based, or aprotic solvent.

Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), or the like.

When the carbonate-based solvent is prepared by mixing a cyclic carbonate and a linear carbonate, a solvent having a low viscosity while having an increased dielectric constant is provided. The cyclic carbonate and the chain carbonate are mixed together in the volume ratio of 1:1 to 1:9.

Examples of the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, or the like. Examples of the ether-based solvent include dibutyl ether, tetraglyme, diglyme, dimethoxyethane, 2-methyltetrahydrofuran, tetrahydrofuran, or the like, and examples of the ketone-based solvent include cyclohexanone, or the like. Examples of the alcohol-based solvent include ethyl alcohol, isopropyl alcohol.

The non-aqueous organic solvent may be used singularly or in a mixture. When the organic solvent is used in a mixture, the mixture ratio can be controlled in accordance with a desirable battery performance.

The non-aqueous electrolyte may further include an overcharge-inhibiting additive such as ethylenecarbonate, pyrocarbonate, and like.

The lithium salt is dissolved in an organic solvent and plays a role of supplying lithium ions in a battery, operating a basic operation of the rechargeable lithium battery, and improving lithium ion transportation between positive and negative electrodes therein.

Examples of the lithium salt include at least one of LiPF₆, LiBF₄, LiSbF₆, LiAsF₆, LiN(SO₃C₂F₅)₂, LiC₄F₉SO₃, LiClO₄, LiAlO₂, LiAlCl₄, LiN(CₓF₂ₓ₋₁SO₂)(C_{y}F_{2y+1}SO₂) (x and y are natural numbers), LiCl, Lil, LiB(C₂O₄)₂ (lithium bis(oxalato) borate; LiBOB), or a combination thereof.

The lithium salt may preferably be used in a concentration ranging from about 0.1 M to about 2.0 M. When the lithium salt is included at the above concentration range, an electrolyte may preferably have excellent performance and lithium ion mobility due to optimal electrolyte conductivity and viscosity.

The separator 113 may be a single layer or a multi-layer, and made of for example polyethylene, polypropylene, polyvinylidene fluoride, or a combination thereof.

Hereinafter, the embodiments are illustrated in more detail with reference to examples. However, the following are exemplary embodiments and are not limiting.

Furthermore, what is not described in this specification can be sufficiently understood by those who have knowledge in this field and will not be illustrated here.

In the examples below the particle size parameters were measured using a Mastersizer 2000 (Malvern Instruments), a propan-2-ol dispersant, a relative refractive index of propan-2-ol of 1.39, a particle refractive index is set at 3.50, sonication is carried out for 2 minutes at 5kHz, and the absorption index value is set at 1.0.

### Example 1

72 wt% of a first silicon oxide powder (A) (based on the entire weight of a negative electrode active material) with a particle diameter (D90) of 11.4 µm, a specific surface area of 3.2 m²/g, and electrical conductivity of 6.5×10⁻² S/m was mixed with 18 wt% of a second silicon oxide powder (B) (based on the entire weight of a negative electrode active material) with a particle diameter (D90) of 2.1 µm, a specific surface area of 39.2 m²/g, and electrical conductivity of 10×10 S/m.

Each of the first silicon oxide powder (A) and the second silicon oxide powder (B) was prepared by co-depositing Si and SiO₂ on a substrate to form SiOₓ, grinding and sieving a portion of the SiOₓ to prepare the first silicon oxide, grinding and sieving a portion of the remaining SiOₓ to prepare the second silicon oxide, and heat treating each of the first silicon oxdie and the second silicon oxide. The co-deposition was conducted by vaporizing each of the Si and SiO₂ at 2000°C, and at atmospheric pressure. The heat treating was conducted at temperature of 1500°C to prepare the amorphous SiOₓ particles.

Next, 10 wt% of polyimide (based on the entire weight of a negative electrode active material) was added to the mixture, and N-methylpyrrolidone was added thereto, preparing negative electrode active material layer composition in a slurry status. The negative electrode active material layer composition was coated on a 15 µm-thick copper foil, compressed with a press roller, and vacuum-dried at 110°C for 2 hours. The dried substrate was cut to have a size of 1.33 cm², fabricating a negative electrode.

The negative electrode was used with a metal lithium as a counter electrode, fabricating a coin-type half-cell. Herein, an electrolyte solution was prepared by mixing ethylenecarbonate (EC), ethylmethylcarbonate (EMC), and diethylcarbonate (DEC) in a volume ratio of 3:2:5 to prepare a mixed solution including 0.2 volume% of LiBF₄ and 5 volume% of fluoro ethylenecarbonate (FEC) and dissolving 1.15M LiPF₆ therein.

### Example 2

A half-cell was fabricated according to the same method as Example 1 except for using a second silicon oxide powder (B) with a particle diameter (D90) of 2.3 µm, a specific surface area of 30.7 m²/g, and electrical conductivity of 5.3x10 S/m instead of the second silicon oxide powder (B).

### Example 3

A half-cell was fabricated according to the same method as Example 1 except for using a second silicon oxide powder (B) with a particle diameter (D90) of 1.5 µm, a specific surface area of 42.3 m²/g, and electrical conductivity of 3.1 ×10² S/m instead of the second silicon oxide powder (B).

### Example 4

A half-cell was fabricated according to the same method as Example 1 except for using a second silicon oxide powder (B) with a particle diameter (D90) of 2.9 µm, a specific surface area of 24.3 m²/g, and electrical conductivity of 5.02x10 S/m instead of the second silicon oxide powder (B).

### Example 5

A half-cell was fabricated according to the same method as Example 1 except for using a mixture of 72 wt% of a first silicon oxide powder (A) (based on the entire weight of a negative electrode active material) with a particle diameter (D90) of 15.1 µm, a specific surface area of 2.32 m²/g, and electrical conductivity of 3.5×0,2 S/m and 18 wt% of the second silicon oxide powder (B) (based on the entire weight of a negative electrode active material) with a particle diameter (D90) of 2.3 µm, a specific surface area of 30.7 m²/g, and electrical conductivity of 5.3x10 S/m.

### Example 6

A half-cell was fabricated according to the same method as Example 1 except for using a mixture of 72 wt% of a first silicon oxide powder (A) (based on the entire weight of a negative electrode active material) with a particle diameter (D90) of 19.6 µm, a specific surface area of 2.10 m²/g, and electrical conductivity of 1.2×10⁻² S/m and 18 wt% of the second silicon oxide powder (B) (based on the entire weight of a negative electrode active material) with a particle diameter (D90) of 2.3 µm, a specific surface area of 30.7 m²/g, and electrical conductivity of 5.3×10 S/m.

### Comparative Example 1

A half-cell was fabricated according to the same method as Example 1 except for using a second silicon oxide powder (B) with a particle diameter (D90) of 5.4 µm, a specific surface area of 3.3 m²/g, and electrical conductivity of 8.9×10⁻⁷ S/m instead of the second silicon oxide powder (B).

### Comparative Example 2

A half-cell was fabricated according to the same method as Example 1 except for using a second silicon oxide powder (B) with a particle diameter (D90) of 8.1 µm, a specific surface area of 2.8 m²/g, and electrical conductivity of 8.8×10⁻⁷ S/m instead of the second silicon oxide powder (B).

### Comparative Example 3

A half-cell was fabricated according to the same method as Example 1 except for using a mixture of 72 wt% of a first silicon oxide powder (A) (based on the entire weight of a negative electrode active material) with a particle diameter (D90) of 31.9 µm, a specific surface area of 0.2 m²/g, and electrical conductivity of 2.6×10⁻⁷ S/m and 18 wt% of the second silicon oxide powder (B) (based on the entire weight of a negative electrode active material) with a particle diameter (D90) of 2.3 µm, a specific surface area of 30.7 m²/g, and electrical conductivity of 5.3×10 S/m.

### Comparative Example 4

A half-cell was fabricated according to the same method as Example 1 except for using a mixture of 72 wt% of a first silicon oxide powder (A) (based on the entire weight of a negative electrode active material) with a particle diameter (D90) of 55.3 µm, a specific surface area of 0.08 m²/g, and electrical conductivity of 1.3×10⁻⁷ S/m and 18 wt% of the second silicon oxide powder (B) (based on the entire weight of a negative electrode active material) with a particle diameter (D90) of 2.3 µm, a specific surface area of 30.7 m²/g, and electrical conductivity of 5.3×10 S/m.

### Comparative Example 5

A half-cell was fabricated according to the same method as Example 1 except for using no second silicon oxide powder (B).

### Comparative Example 6

A half-cell was fabricated according to the same method as Example 1 except for using no second silicon oxide powder (A).

The first silicon oxide powders (A) and the second silicon oxide powders (B) according to Examples 1 to 6 and Comparative Examples 1 to 6 were provided regarding features in the following Table 1.

**[Table 1]**

| | | Examples | | | | | | Comparative Examples | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| First silicon oxide (A) | Particle diameter (um) | 11.4 | 11.4 | 11.4 | 11.4 | 15.1 | 19.6 | 11.4 | 11.4 | 31.9 | 55.3 | 11.4 | - |
| | Specific surface area (m²/g) | 3.2 | 3.2 | 3.2 | 3.2 | 2.32 | 2.10 | 3.2 | 3.2 | 0.2 | 0.08 | 3.2 | - |
| | Electrical conductivity (S/m) | 6.5×1 0⁻² | 6.5×1 0⁻² | 6.5×1 0⁻² | 6.5×1 0⁻² | 3.5×1 0⁻² | 1.2X1 0⁻² | 6.5×1 0⁻² | 6.5×1 0⁻² | 2.6×1 0⁻⁷ | 1.3×1 0⁻⁷ | 6.5×1 0⁻² | - |
| Second silicon oxide (B) | Particle diameter (um) | 2.1 | 2.3 | 1.5 | 2.9 | 2.3 | 2.3 | 5.4 | 8.1 | 2.3 | 2.3 | - | 2.1 |
| | Specific surface area (m²/g) | 39.2 | 30.7 | 42.3 | 24.3 | 30.7 | 30.7 | 9.3 | 7.8 | 30.7 | 30.7 | - | 39.2 |
| | Electrical conductivity (S/m) | 10×1 0 | 5.3×1 0 | 3.1×1 1 0² | 5.02× 10 | 5.3×1 0 | 5.3× 0 | 8.9×1 0⁻¹ | 8.8×1 0⁻¹ | 5.3×1 0 | 5.3×1 0 | - | 10×1 0 |
| Particle diameter ratio (A/B) | | 5.43 | 4.96 | 7.6 | 3.93 | 6.57 | 8.52 | 2.11 | 1.41 | 13.87 | 24.04 | - | - |
| Specific surface area ratio (B/A) | | 12.25 | 9.59 | 13.22 | 7.59 | 13.23 | 14.62 | 2.91 | 2.44 | 153.5 | 383.7 5 | - | - - |

### Evaluation 1: Particle distribution graph analysis of Negative electrode active material

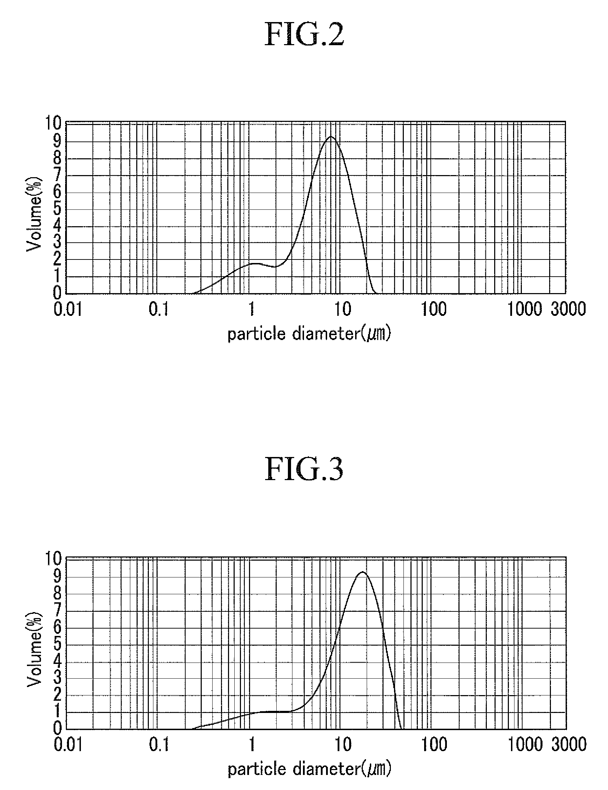

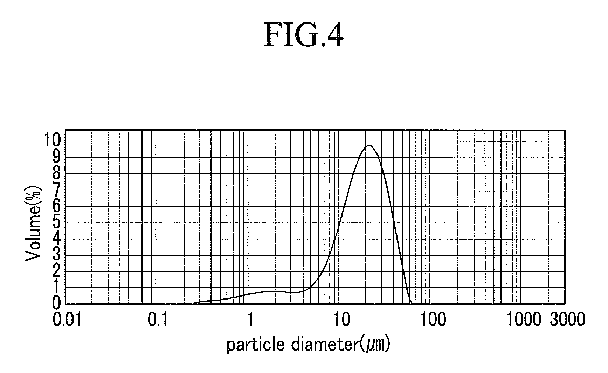

The negative electrode active materials according to Examples 1 to 6 and Comparative Examples 1 to 6 were measured regarding particle diameter distribution in a laser diffraction scattering diameter distribution measurement method. The results are provided in FIGS. 2 to 4. Table 2 shows an area ratio A/B of particle distribution peaks.

**[Table 2]**

| | Examples | | | | | | Comparative Examples | | | | | |
|---|---|---|---|---|---|---|---|---|---|---|---|---|
| | 1 | 2 | 3 | 4 | 5 | 6 | 1 | 2 | 3 | 4 | 5 | 6 |
| Area ratio (A/B) of particle distribution peak | 4,89 | 3.12 | 5.32 | 3.02 | 6.53 | 7.85 | 2.79 | 1.56 | 15.33 | 21.56 | - | - |

FIGS. 2 to 4 are the diameter distribution graph of the negative electrode active materials according to each Examples 1 and 6 and Comparative Example 3.

### Evaluation 2: Specific surface area analysis of Negative electrode active material

The negative electrode active materials according to Examples 1 to 6 and Comparative Examples 1 to 6 were measured regarding specific surface area in a BET method. The results are provided in the following Table 3.

**[Table 3]**

| | Examples | | | | | | Comparative Examples | | | | | |
|---|---|---|---|---|---|---|---|---|---|---|---|---|
| | 1 | 2 | 3 | 4 | 5 | 6 | 1 | 2 | 3 | 4 | 5 | 6 |
| Specific surface area (m²/g) | 10.4 | 8.7 | 11.02 | 7.42 | 7.996 | 7.82 | 4.42 | 4.12 | 6.3 | 6.204 | - | - |

### Evaluation 3: Electrical conductivity analysis of Negative electrode active material

The negative electrode active materials according to Examples 1 to 6 and Comparative Examples 1 to 6 were regarding electrical conductivity in a 4 pin probe powder resistance measurement method. The results are provided in the following Table 4.

**[Table 4]**

| | Examples | | | | | | Comparative Examples | | | | | |
|---|---|---|---|---|---|---|---|---|---|---|---|---|
| | 1 | 2 | 3 | 4 | 5 | 6 | 1 | 2 | 3 | 4 | 5 | 6 |
| Electrical conductivity (S/m) | 3.2× 10¹ | 9.7× 10⁰ | 8.9× 10¹ | 7.5× 10⁰ | 4.2× 10⁰ | 1.3× 10⁰ | 9.6× 10⁻² | 7.9× 10⁻² | 5.3× 10⁻³ | 2.8× 10⁻³ | - | - |

### Evaluation 4: Charge and discharge characteristics of Rechargeable lithium battery cell

The rechargeable lithium battery cells according to Examples 1 to 6 and Comparative Examples 1 to 6 were measured regarding charge and discharge characteristic. The results are provided in the following Table 5.

The charge was performed up to 0.005V with 0.05C (1C=1200mAh) in a CC mode.

The initial efficiency (%) was calculated as a percentage of initial discharge capacity relative to initial charge capacity.

The capacity retention (%) was calculated as a percentage of discharge capacity at the 50th cycle relative to initial discharge capacity.

**[Table 5]**

| | Initial charge capacity (mAh/g) | Initial discharge capacity (mAh/g) | Initial efficiency (%) | Capacity retention (%) (50 cycle) |
|---|---|---|---|---|
| Example 1 | 2481 | 1846 | 74.4 | 90.3 |
| Example 2 | 2423 | 1796 | 74.1 | 88.1 |
| Example 3 | 2456 | 1815 | 73.9 | 92.4 |
| Example 4 | 2417 | 1789 | 74.0 | 85.6 |
| Example 5 | 2391 | 1741 | 72.8 | 84.2 |
| Example 6 | 2354 | 1697 | 72.1 | 83.6 |
| Comparative Example 1 | 2381 | 1741 | 73.1 | 78.4 |
| Comparative Example 2 | 2411 | 1767 | 73.3 | 65.4 |
| Comparative Example 3 | 1759 | 1181 | 67.1 | 51.8 |
| Comparative Example 4 | 1817 | 1274 | 70.1 | 70.7 |
| Comparative Example 5 | 2331 | 1660 | 71.2 | 58.2 |
| Comparative Example 6 | 2122 | 1470 | 69.3 | 63.8 |

Referring to Table 5, the cells according to Examples 1 to 6 had excellent cycle-life characteristic compared with the cells according to Comparative Examples 1 to 6.

While this disclosure has been described in connection with the above embodiments, it is to be understood that the invention is not limited to the disclosed embodiments, but covers various modifications and equivalent arrangements included within the scope of the appended claims.

## Claims

1. A negative electrode active material for a rechargeable lithium battery, comprising particles of a first silicon oxide and particles of a second silicon oxide, wherein particles of the second silicon oxide have different particle diameters (D90) from particles of the first silicon oxide and a particle distribution peak area ratio of the first silicon oxide relative to the second silicon oxide in a range of 3.0 to 12.0, optionally from 3.5 to 6.0.

2. A negative electrode active material according to claim 1, wherein the particle diameter (D90) ratio of the first silicon oxide relative to the second silicon oxide is in a range of 1.2 to 100, optionally from 3.5 to 20.

3. A negative electrode active material according to claim 1 or claim 2, wherein the second silicon oxide particles relative to the first silicon oxide particles has a specific surface area ratio ranging from 2 to 50, optionally from 5 to 22.5.

4. A negative electrode active material according to any of claims 1 to 3 wherein the first silicon oxide has a particle diameter (D90) ranging from 6 to 50 µm, optionally from 10 to 20 µm.

5. A negative electrode active material according to any of claims 1 to 4 wherein the second silicon oxide has a particle diameter (D90) ranging from 0.5 to 5 µm, optionally from 1 to 3 µm.

6. A negative electrode active material according to any of claims 1 to 5 wherein the first silicon oxide has a specific surface area ranging from 1 to 5 m²/g, optionally from 2 to 4 m²/g.

7. A negative electrode active material according to any of claims 1 to 6 wherein the second silicon oxide has a specific surface area ranging from 10 to 50 m²/g, optionally from 20 to 45 m²/g.

8. A negative electrode active material according to any of claims 1 to 7 wherein the first silicon oxide has an electrical conductivity ranging from 1.0×10⁻² to 1.0x10⁰ S/m, optionally from 5.0×10⁻² to 5.0x10⁻¹ S/m.

9. A negative electrode active material according to any of claims 1 to 8 wherein the second silicon oxide has an electrical conductivity ranging from 1.0×10 to 1.0× 10³ S/m, optionally from 5.0×10 to 5.0×10² S/m.

10. A negative electrode active material according to any of claims 1 to 9 wherein the negative electrode active material includes the first silicon oxide in an amount ranging from 65 to 95 wt%, optionally from 75 to 85 wt%, and the second silicon oxide in an amount ranging from 5 to 35 wt%, optionally from 15 to 25 wt%, based on the total amount of silicon oxide present.

11. A negative electrode active material according to any of claims 1 to 10 wherein the negative electrode active material has an electrical conductivity ranging from 1.0× 10⁰ to 1.0×10² S/m, optionally from 9.0×10⁰ to 9.0×10 S/m.

12. A negative electrode active material according to any of claims 1 to 11 wherein the negative electrode active material has a specific surface area ranging from 7 to 11.5 m²/g, optionally from 8 to 11 m²/g.

13. A negative electrode active material according to any of claims 1 to 12 further include a coating layer coated on at least one surface of the first silicon oxide or the second silicon oxide particles, optionally the coating layer includes at least one selected from a carbon-based material, a metal, and a combination thereof.

14. A rechargeable lithium battery that comprises a negative electrode that includes a current collector and a negative electrode active material layer disposed on the current collector, wherein the negative electrode active material layer comprises the negative electrode active material of any of claims 1 to 13.

15. A method of preparing a negative electrode for a rechargeable lithium battery that comprises preparing a negative electrode active material layer composition comprising the negative electrode active material of any of claims 1 to 13; and coating the negative electrode active material layer composition on a current collector.

## Patentansprüche

1. Negativelektroden-Aktivmaterial für eine wiederaufladbare Lithiumbatterie, umfassend Teilchen eines ersten Siliciumoxids und Teilchen eines zweiten Siliciumoxids, wobei Teilchen des zweiten Siliciumoxids andere Teilchendurchmesser (D90) als Teilchen des ersten Siliciumoxids und ein Peakflächenverhältnis für die Teilchenverteilung des ersten Siliciumoxids in Bezug auf das zweite Siliciumoxid in einem Bereich von 3,0 bis 12,0, gegebenenfalls von 3,5 bis 6,0, aufweisen.

2. Negativelektroden-Aktivmaterial nach Anspruch 1, wobei das Verhältnis des Teilchendurchmessers (D90) des ersten Siliciumoxids in Bezug auf das zweite Siliciumoxid in einem Bereich von 1,2 bis 100, gegebenenfalls von 3,5 bis 20, liegt.

3. Negativelektroden-Aktivmaterial nach Anspruch 1 oder Anspruch 2, wobei die Teilchen des zweiten Siliciumoxids in Bezug auf die Teilchen des ersten Siliciumoxids ein spezifisches Oberflächenverhältnis aufweisen, das von 2 bis 50, gegebenenfalls von 5 bis 22,5, reicht.

4. Negativelektroden-Aktivmaterial nach einem der Ansprüche 1 bis 3, wobei das erste Siliciumoxid einen Teilchendurchmesser (D90) aufweist, der von 6 bis 50 µm, gegebenenfalls von 10 bis 20 µm, reicht.

5. Negativelektroden-Aktivmaterial nach einem der Ansprüche 1 bis 4, wobei das zweite Siliciumoxid einen Teilchendurchmesser (D90) aufweist, der von 0,5 bis 5 µm, gegebenenfalls von 1 bis 3 µm, reicht.

6. Negativelektroden-Aktivmaterial nach einem der Ansprüche 1 bis 5, wobei das erste Siliciumoxid ein spezifisches Oberflächenverhältnis aufweist, das von 1 bis 5 m²/g, gegebenenfalls von 2 bis 4 m²/g, reicht.

7. Negativelektroden-Aktivmaterial nach einem der Ansprüche 1 bis 6, wobei das zweite Siliciumoxid ein spezifisches Oberflächenverhältnis aufweist, das von 10 bis 50 m²/g, gegebenenfalls von 20 bis 45 m²/g, reicht.

8. Negativelektroden-Aktivmaterial nach einem der Ansprüche 1 bis 7, wobei das erste Siliciumoxid eine elektrische Leitfähigkeit aufweist, die von 1,0×10⁻² bis 1,0×10⁰ S/m, gegebenenfalls von 5,0×10⁻² bis 5,0×10⁻¹ S/m, reicht.

9. Negativelektroden-Aktivmaterial nach einem der Ansprüche 1 bis 8, wobei das zweite Siliciumoxid eine elektrische Leitfähigkeit aufweist, die von 1,0x10 bis 1,0x 10³ S/m, gegebenenfalls von 5,0x 10 bis 5,0x10² S/m, reicht.

10. Negativelektroden-Aktivmaterial nach einem der Ansprüche 1 bis 9, wobei das Negativelektroden-Aktivmaterial das erste Siliciumoxid in einer Menge einschließt, die von 65 bis 95 Gew.-%, gegebenenfalls von 75 bis 85 Gew.-%, reicht und das zweite Siliciumoxid in einer Menge, die von 5 bis 35 Gew.-%, gegebenenfalls von 15 bis 25 Gew.-%, reicht, auf Grundlage der Gesamtmenge des vorhandenen Siliciumoxids.

11. Negativelektroden-Aktivmaterial nach einem der Ansprüche 1 bis 10, wobei das Negativelektroden-Aktivmaterial eine elektrische Leitfähigkeit aufweist, die von 1,0x 10⁰ bis 1,0x 10² S/m, gegebenenfalls von 9,0x 10⁰ bis 9,0x 10 S/m, reicht.

12. Negativelektroden-Aktivmaterial nach einem der Ansprüche 1 bis 11, wobei das Negativelektroden-Aktivmaterial ein spezifisches Oberflächenverhältnis aufweist, das von 7 bis 11,5 m²/g, gegebenenfalls von 8 bis 11 m²/g, reicht.

13. Negativelektroden-Aktivmaterial nach einem der Ansprüche 1 bis 12, ferner einschließend eine Beschichtungsschicht, mit der mindestens eine Oberfläche der Teilchen des ersten Siliciumoxids oder des zweiten Siliciumoxids beschichtet ist, gegebenenfalls schließt die Beschichtungsschicht mindestens eines ein, das aus einem Material auf Kohlenstoffbasis, einem Metall und einer Kombination davon ausgewählt wird.

14. Wiederaufladbare Lithiumbatterie, die eine Negativelektrode umfasst, die einen Stromabnehmer und eine Negativelektroden-Aktivmaterialschicht einschließt, die an dem Stromabnehmer angeordnet ist, wobei die Negativelektroden-Aktivmaterialschicht das Negativelektroden-Aktivmaterial nach einem der Ansprüche 1 bis 13 umfasst.

15. Verfahren zur Herstellung einer Negativelektrode für eine wiederaufladbare Lithiumbatterie, das die Herstellung der Zusammensetzung einer Negativelektroden-Aktivmaterialschicht umfasst, umfassend das Negativelektroden-Aktivmaterial nach einem der Ansprüche 1 bis 13 und das Beschichten eines Stromabnehmers mit der Zusammensetzung der Negativelektroden-Aktivmaterialschicht.

## Revendications

1. Matériau actif d'électrode négative pour une batterie au lithium rechargeable, comprenant des particules d'un premier oxyde de silicium et des particules d'un deuxième oxyde de silicium, dans lequel les particules du deuxième oxyde de silicium ont des diamètres de particule (D90) différents de ceux des particules du premier oxyde de silicium et un rapport d'aires de pic de distribution de particules entre le premier oxyde de silicium et le deuxième oxyde de silicium dans une plage de 3,0 à 12,0, en option de 3,5 à 6,0.

2. Matériau actif d'électrode négative selon la revendication 1, dans lequel le rapport des diamètres de particule (D90) entre le premier oxyde de silicium et le deuxième oxyde de silicium est dans une plage de 1,2 à 100, en option de 3,5 à 20.

3. Matériau actif d'électrode négative selon la revendication 1 ou la revendication 2, dans lequel les deuxièmes particules d'oxyde de silicium par rapport aux premières particules d'oxyde de silicium ont un rapport d'aires de surface spécifique allant de 2 à 50, en option de 5 à 22,5.

4. Matériau actif d'électrode négative selon l'une quelconque des revendications 1 à 3, dans lequel le premier oxyde de silicium a un diamètre de particule (D90) allant de 6 à 50 µm, en option de 10 à 20 µm.

5. Matériau actif d'électrode négative selon l'une quelconque des revendications 1 à 4, dans lequel le deuxième oxyde de silicium a un diamètre de particule (D90) allant de 0,5 à 5 µm, en option de 1 à 3 µm.

6. Matériau actif d'électrode négative selon l'une quelconque des revendications 1 à 5, dans lequel le premier oxyde de silicium a une aire de surface spécifique allant de 1 à 5 m²/g, en option de 2 à 4 m²/g.

7. Matériau actif d'électrode négative selon l'une quelconque des revendications 1 à 6, dans lequel le deuxième oxyde de silicium a une aire de surface spécifique allant de 10 à 50 m²/g, en option de 20 à 45 m²/g.

8. Matériau actif d'électrode négative selon l'une quelconque des revendications 1 à 7, dans lequel le premier oxyde de silicium a une conductivité électrique allant de 1,0 x 10⁻² à 1,0 x 10⁰ S/m, en option de 5,0 x 10⁻² à 5,0 x 10⁻¹ S/m.

9. Matériau actif d'électrode négative selon l'une quelconque des revendications 1 à 8, dans lequel le deuxième oxyde de silicium a une conductivité électrique allant de 1,0 x 10 à 1,0 x 10³ S/m, en option de 5,0 x 10 à 5,0 x 10² S/m.

10. Matériau actif d'électrode négative selon l'une quelconque des revendications 1 à 9, dans lequel le matériau actif d'électrode négative comprend le premier oxyde de silicium en une quantité allant de 65 à 95 % en poids, en option de 75 à 85 % en poids, et le deuxième oxyde de silicium en une quantité allant de 5 à 35 % en poids, en option de 15 à 25 % en poids, sur la base de la quantité totale d'oxyde de silicium présente.

11. Matériau actif d'électrode négative selon l'une quelconque des revendications 1 à 10, dans lequel le matériau actif d'électrode négative a une conductivité électrique allant de 1,0 x 10⁰ à 1,0 x 10² S/m, en option de 9,0 x 10⁰ à 9,0 x 10 S/m.

12. Matériau actif d'électrode négative selon l'une quelconque des revendications 1 à 11, dans lequel le matériau actif d'électrode négative a une aire de surface spécifique allant de 7 à 11,5 m²/g, en option de 8 à 11 m²/g.

13. Matériau actif d'électrode négative selon l'une quelconque des revendications 1 à 12 comprennent en outre une couche de revêtement déposée sur au moins une surface du premier oxyde de silicium ou sur les particules du deuxième oxyde de silicium, en option la couche de revêtement comprend au moins l'un sélectionné parmi un matériau à base de carbone, un métal, et une combinaison de ceux-ci.

14. Batterie au lithium rechargeable qui comprend une électrode négative qui comprend un collecteur de courant et une couche de matériau actif d'électrode négative disposée sur le collecteur de courant, dans laquelle la couche de matériau actif d'électrode négative comprend le matériau actif d'électrode négative selon l'une quelconque des revendications 1 à 13.

15. Procédé de préparation d'une électrode négative pour une batterie au lithium rechargeable qui comprend la préparation d'une composition de couche de matériau actif d'électrode négative comprenant le matériau actif d'électrode négative selon l'une quelconque des revendications 1 à 13 ; et le dépôt de la composition de couche de matériau actif d'électrode négative sur un collecteur de courant.
